# EUROPÄISCHE PATENTSCHRIFT

(11) **EP 0 601 592 B1**
(45) Veröffentlichungstag und Bekanntmachung des Hinweises auf die Patenterteilung: **17.04.1996**
(21) Anmeldenummer: 93119943.4
(22) Anmeldetag: 09.12.1993
(51) Int. Cl.: F16B 39/22

(54) **Verwendung einer Gewindeformschraube zum Gewindeformen in Gestein oder Beton**
Use of a thread forming screw for thread forming in rock or concrete
Utilisation d'une vis pour former un filet pour la formation d'un filet dans de la pierre ou du béton

(30) Priorität: 10.12.1992 DE 9216791 U
(43) Veröffentlichungstag der Anmeldung: 15.06.1994
(73) Patentinhaber: ITW BEFESTIGUNGSSYSTEME GmbH, D-58642 Iserlohn (DE)
(72) Erfinder: Kollmann, Harald, 58644 Iserlohn (DE); Castor, Jürgen, 46045 Oberhausen (DE); Monitz, Heribert, 46284 Dorsten (DE)
(74) Vertreter: Dipl.-Ing. H. Hauck, Dipl.-Ing. E. Graalfs, Dipl.-Ing. W. Wehnert, Dr.-Ing. W. Döring

(56) Entgegenhaltungen:
- ADHäSION KLEBEN & DICHTEN, Bd.37, Nr.4, April 1993, MüNCHEN Seiten 39 - 40 KALTENHAUSER 'Neue Dimensionen bei der Schraubensicherung'
- WERKSTATT UND BETRIEB, Bd.124, Nr.11, November 1991, MüNCHEN Seite ZM260 'Schraubensicherung umweltfreundlich und rationell'

## Beschreibung

Gegenstand der Erfindung ist die Verwendung einer Schraube zum Formen eines Gewindes in einem in Gestein oder Beton gebohrten Loch.

Zur Befestigung von Gegenständen, beispielsweise Bauteilen, an einem Träger aus Beton oder hartem Gestein ist die Verwendung von Dübeln bekannt. Für den Dübel wird ein Loch vorgebohrt, in das dieser frei einschiebbar ist. Der Dübel ist so gestaltet, daß er sich durch das Eindrehen einer Gewindeschraube unter Kraftschluß im Bohrloch verspannt. Für die verschiedensten Anwendungszwecke ist eine große Reihe von verschiedenen Dübelkonstruktionen bekannt geworden. Dübelverbindungen sind verhältnismäßig aufwendig.

Deshalb ist schon versucht worden, Gewindeformschrauben für das vorgebohrte Loch zur Verfügung zu stellen. Aus der DE-PS 25 21 555 ist eine solche Schraube bekannt, die zwei Gewindegänge unterschiedlichen Durchmessers aufweist. Der Gewindegang mit dem größeren Durchmesser formt im Kernbohrloch beim Einschrauben ein Gewinde, während der Gewindegang mit dem kleineren Durchmesser im wesentlichen dem Durchmesser der Kernlochbohrung entspricht. Das im Durchmesser kleinere Gewinde dient der Zentrierung der Schraube im Bohrloch und sichert, daß das Gewinde parallel geformt wird. Das Formgewinde ist konisch ausgeführt und hat einen zum Schraubenkopf zunehmenden spitzen Durchmesser mit in Umfangsabständen beabstandeten Einschnitten. Die Schraube läßt sich fest in der Bohrung einbetten und sorgt für eine sichere Verankerung. Trotz günstiger gewindeformender Eigenschaften bereitet jedoch das Einschrauben dieser Gewindeformschraube aufgrund hoher Verformungs- und Reibkräfte ab einer bestimmten Einschraubtiefe Schwierigkeiten. Dann werden die aufzubringenden Einschraubkräfte so hoch, daß die Gefahr des Abdrehens der Schraube besteht. Das Entfernen einer abgebrochenen Schraube aus dem Bohrloch ist außerordentlich schwierig.

Die EP-A-0 394 604 ist auf Verbesserungen des Einschraubens der Gewindeformschraube und ihres Sitzes im Bohrloch gerichtet. Für das Einschrauben sieht sie das Aufbringen eines impulsweisen oder schlagenden Drehmomentes vor, das sich mittels eines Schlagschraubers aufbringen läßt. Das Schlagen in Drehrichtung der Schraube bewirkt ein ständig wiederholtes Freischlagen und Ausräumen des Gewindekanals, wodurch der Aufbau eines übermäßigen Torsionsmomentes vermieden wird, das ein Einschrauben in variabler Einschraubtiefe ermöglicht. Insbesondere läßt sich eine höhere Einschraubtiefe als beim herkömmlichen Eindrehen und damit einer höhere Auszugsfestigkeit erreichen. Da die Gefahr eines Schraubenbruchs nicht besteht, ist auch die Sicherheit der Verschraubung erhöht. Durch das schlagweise Gewindeformen erfahren die Materialteilchen in der Gewindezone eine Verdichtung, die das Losdrehmoment deutlich erhöht. Kerben oder Einschnitte im Formgewinde der Schraube zeigen eine verstärkte Räumwirkung und verstärkt mithin den Verdichtungseffekt. Hinsichtlich der Schraube ist vorgesehen, daß das Formgewinde in ein bis drei Gewindegängen von der Spitze aus auf den Enddurchmesser kommt. Dadurch wird bei verhältnismäßig geringer Einschraubtiefe bereits ein hoher Auszugswert erreicht.

Die solchermaßen eingedrehte Schraube kann bei gewissen Auszugskräften aus der Gewindebohrung herausgerissen werden, wobei vorzugsweise das Innengewinde abschert. Außerdem ist sie trotz erhöhten Losdrehmomentes losdrehgefährdet und kann sich insbesondere unter Vibrationseinfluß oder sonstiger dynamischer Beanspruchung selbsttätig lösen. Dies ist beispielsweise bei der Befestigung wind- bzw. sogbeanspruchter Teile von Bedeutung, insbesondere bei der Befestigung von Fassaden oder anderen Bauteilen an Bauwerken.

Davon ausgehend liegt der Erfindung die Aufgabe zugrunde, eine verbesserte Verwendung einer Schraube der eingangs genannten Art zu schaffen, die sicherer in Gestein oder Beton gehalten ist.

Die Lösung der Aufgabe ist in Anspruch 1 angegeben. Vorteilhafte Ausgestaltungen sind in den Unteransprüchen enthalten.

Eine erfindungsgemäß verwendete Schraube hat ein Schraubengewinde, das eine Beschichtung aus einem aushärtbaren Klebstoff aufweist. Das Eindrehen der Gewindeformschraube in ein Bohrloch in Gestein oder Beton erfolgt vor dem Aushärten des Klebstoffes, beispielsweise mit Hilfe eines Schlagschraubers. Nach dem Aushärten des Klebstoffes ist die Gewindeformschraube besonders fest in der Bohrung gehalten, so daß eine erheblich gesteigerte Auszugsfestigkeit erreicht wird. Bei Ausreißversuchen zeigt sich, daß das geformte Innengewinde praktisch nicht mehr abschert. Vielmehr werden beträchtliche Teile des Traggewindes mit Gestein oder Beton aus der Umgebung des Bohrloches aus dem Bauteil herausgerissen. Es kommt hinzu, daß durch das Gewindeformen eine Materialverdichtung um das Bohrloch erreicht werden kann, welche den Ausbruchwiderstand noch erhöht.

Zudem bewirkt die ausgehärtete Beschichtung eine Rückdrehsicherung der Gewindeformschraube im Trägerbauteil. Das Eindrehen der Schraube löst nämlich einen Aushärteprozeß aus, der bei bekannten Klebstoffen bereits nach wenigen Minuten zu einem deutlich erhöhten Rückdrehmoment führt. Nach etwa 24 Stunden ist der Klebstoff ausgehärtet und bewirkt ein Verkleben der Schraube in dem durch sie geformten Gewinde. Die Verklebung zusammen mit der Reibhaftung der Schraube in dem durch sie geschnittenen Gewinde sorgt für ein ganz erhebliches Rückdrehmoment und eine hohen Anforderungen gerecht werdende Rückdrehsicherung. Eine erfindungsgemäß hergestellte Schraubverbindung ist folglich auch dynamischen Belastungen gewachsen, wie sie insbesondere an Bauwerken auftreten. Typische Anwendungen sind deshalb auf die Fassaden- und Dämmstoff- sowie Dachhautbefestigung gerichtet.

Es kommt hinzu, daß die Beschichtung eine Abdichtung der Schraube im Bohrloch gegenüber eindringender Flüssigkeit bewirken kann. Je nach Auswahl der Beschichtung kann eine Abdichtwirkung gegenüber verschiedenen Flüssigkeiten wie Wasser, Benzin, Öl, Fett oder kombinierten Flüssigkeitsbeanspruchungen erzielt werden. Dies ist ebenfalls bei der Nutzung an Bauwerken von Vorteil, wobei insbesondere Wasser an einem Eindringen in Beton gehindert werden kann. Herkömmlicherweise sind für eine Abdichtwirkung zusätzliche Bauteile wie Dichtringe erforderlich, die erfindungsgemäß vermieden werden können.

Als Träger für eine erfindungsgemäße Schraube kommen verschiedene Sorten Beton oder Gestein oder artverwandter Materialien wie Mauerwerk, Marmor, Mineralfaserplatten in Betracht. Ferner kann die Schraube bei Leichtbeton oder Gasbeton zum Einsatz kommen, wobei sie sogar eine Selbstbohrschraube sein kann.

Die Beschichtung soll das Drehen der Schraube beim Gewindeformen nicht beeinträchtigen und nach dem Einschrauben eine Verklebung zwischen Schraube und geformtem Gewinde bewirken. Die Beschichtung kann unmittelbar vor dem Gewindeformen aufgebracht sein und einen aushärtbaren Klebstoff aufweisen. Es ist vorstellbar, daß die Beschichtung einen das Eindrehen erleichternden Stoff enthält.

Ferner kann die Beschichtung einen mikroverkapselten Klebstoff aufweisen, der durch die Scherkräfte beim Gewindeformen aktiviert wird und nach dem Eindrehen aushärtet. Dabei kann die Beschichtung einen Klebstoff enthalten, der mittels eines Polymerfilms mikroverkapselt und in ein reaktives Bindersystem eingebettet ist. Eine entsprechende Beschichtung bleibt nach dem Aufbringen auf die Schraube inaktiv, bis durch das Einschrauben in Beton oder Gestein die Kapseln zerplatzen und der Klebstoff zum Aushärten gebracht wird. Ein derartiger mikroverkapselter Klebstoff ist unter der Warenbezeichnung "Scotch Grip" 2353 und 2451 von der Firma 3M erhältlich.

Eine alternative Beschichtung kann einen Flüssigkunststoff und einen Härter enthalten, die mittels eines Polymerfilms getrennt mikroverkapselt und in einem Trägerlack eingebettet sind. Die Beschichtung einer Schraube mit diesem System ist trocken, griffest und jederzeit einsatzbereit. Durch das Verschrauben werden die Mikrokapseln durch Druck und/oder Scherbeanspruchung zerstört, wobei der Flüssigkunststoff und der Härter freigesetzt und gemischt werden, so daß es zu einer chemischen Reaktion (Polymerisation) kommt und der Klebstoff aushärtet. Ein entsprechender mikroverkapselter Klebstoff unter der Warenbezeichnung OT precote 30 + 80 ist von der Omni-Technik erhältlich.

Bevorzugt erstreckt sich die Beschichtung über den gesamten Umfang des Schraubengewindes. Für eine günstige Beeinflussung der Auszugsfestigkeit, feste Rückdrehsicherung sowie sichere Abdichtung kann sich die Beschichtung ferner über mehrere Gewindegänge des Schraubgewindes erstrecken. Die Erstreckung der Beschichtung über das Gewinde ist den Anforderungen an diese Eigenschaften anpaßbar.

Je nach Beanspruchung kann die Beschichtung säure- und/oder laugenbeständig sein. Die Resistenz der o.g. Klebstoffe gegen Flüssigkeiten hängt von der Typennummer ab.

Für die Schraube können verschiedene herkömmliche Materialien ausgewählt werden. So kommt als Schraubenmaterial ein einsatzgehärteter C-Stahl in Betracht. Gehärtetes Schraubenmaterial fördert eine Materialverfestigung um das Bohrloch. Außerdem kann die Schraube vor dem Beschichten mit dem mikroverkapselten Kunststoff bereits eine Oberflächenbeschichtung aufweisen, die beispielsweise galvanisch aufgebracht ist und eine Verzinkung sein kann. Die Erfindung ermöglicht jedoch auch den Einsatz verhältnismäßig weicher Materialien, die für das Gewindeformen in Beton oder Gestein bislang nicht herangezogen werden konnten. So kann die Schraube aus Edelstahl oder Aluminium hergestellt sein. Das Eindrehen der Schraube wird durch die Weichheit des Materials begünstigt, so daß relativ geringe Eindrehmomente erforderlich sind. Durch Gewindeverformung kann die tragende Gewindefläche zwar verringert werden. Jedoch bewirkt der Klebstoff nach dem Aushärten einen Anstieg von Auszugsfestigkeit und erforderlichem Rückdrehmoment, der den Anforderungen gerecht wird. Somit kommen durch die Erfindung Schraubenmaterialien in Betracht, die für die beabsichtigte Verwendung besonders günstige und bislang nicht nutzbare Eigenschaften aufweisen oder besonders kostengünstig sind. So empfiehlt sich der Einsatz von Edelstahl oder Aluminium an Gebäuden insbesondere aus Gründen des Korrosionsschutzes.

Eine erfindungsgemäß verwendete Schraube kann grundsätzlich ganz verschieden ausgestaltet sein, z.B. mit einem eingängigen Blechschrauben- oder Holzschraubengewinde. Es empfehlen sich jedoch Konstruktionen, die entsprechend der DE-PS 25 21 555 oder EP-A-0 394 604 ausgeführt sind und zusätzlich die diesen Ausführungen eigenen Vorteile aufweisen.

Hinsichtlich einer Vorrichtung zum Gewindeformen ist eine Kopplung der Schraube mit einem motorischen Einschraubwerkzeug bevorzugt, welches diese gemäß EP-A-0 394 604 impulsweise in Drehung versetzt. Besonders bevorzugt ist, die Schraube mittels eines radial schlagenden Einschraubwerkzeuges einzuschrauben. Bei diesem Einschraubwerkzeug wirken die Einschraubkräfte ausschließlich in Umfangsrichtung auf den Werkzeughalter, wodurch die erfindungsgemäßen Wirkungen in besonderem Maße gefördert werden.

Einzelheiten und Vorteile der Erfindung ergeben sich aus der nachfolgenden Beschreibung der zugehörigen Zeichnungen, die zwei bevorzugte Ausgestaltungen zeigt. In der Zeichnung zeigen:
Fig. 1 eine Betonschraube mit Nagelspitze in Seitenansicht;
Fig. 2 eine Betonschraube mit gewendelter Spitze in Seitenansicht;
Fig. 3 einen Schnitt durch die Schrauben nach Fig. 1 und Fig. 2 entlang der Linie III-III.

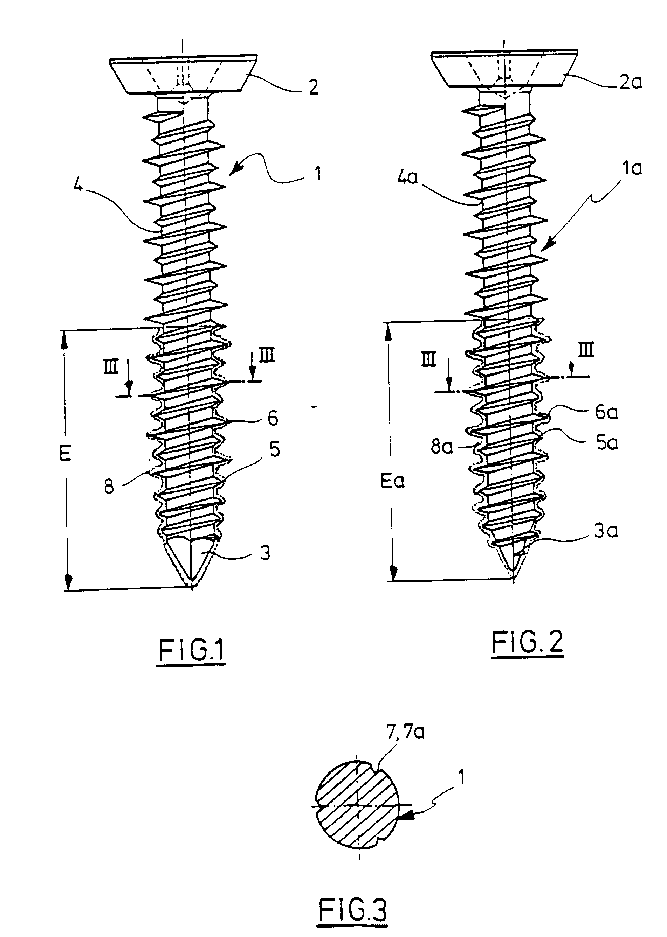

Eine Betonschraube 1 gemäß Fig. 1 hat eine Kopf 2 und eine sogenannte Nagelspitze 3. Der Kern eines Gewindeschaftes 4 zwischen Kopf 2 und Nagelspitze 3 hat über die gesamte Länge einen konstanten Durchmesser. Auf ihm ist ein zweigängiges Gewinde ausgebildet, das einen ersten Gang 5 und einen zweiten Gang 6 aufweist, wobei letzterer einen größeren Durchmesser als der erstere hat. Der Durchmesser des ersten Gewindegangs 5 entspricht dem Durchmesser eines Kernlochs, das im Beton oder einem ähnlichen Werkstoff vorgebohrt ist, in den die Schraube 1 eingeschraubt werden soll. Das Gegengewinde in der Wandung des Kernlochs oder der Kernbohrung wird daher nur von dem Gewindegang 6 erzeugt, während der Gewindegang 5 ausschließlich zentrierende Wirkung entfaltet. Zu Räumungszwecken weist der Gewindegang 6 Kerben 7 auf, die in Fig. 3 zu erkennen sind. Außerdem ist der Außendurchmesser des Gewindegangs 6 nahe der Spitze 3 etwas kleiner. Er nimmt von der Spitze 3 ausgehend allmählich zu, erreicht jedoch nach zwei Steigungen bereits den Außendurchmesser, den der Gewindegang 6 darüber aufweist.

Im Bereich E hat die Gewindeschraube 1 eine Beschichtung 8 mit einem mikroverkapselten Klebstoff. Die Beschichtung 8 ist durch Aufbringen des mikroverkapselten Klebers im flüssigen Zustand erzeugt. Beim Eindrehen der Schraube 1 wird die Beschichtung insbesondere am Gewindegang 6 mit dem größeren Durchmesser durch Beanspruchung aktiviert und härtet nach dem Eindrehen aus, wobei sie durch Verkleben von Schraube 1 und Träger erhöhte Auszugswerte eine Rückdrehsicherung und Abdichtung bewirkt.

Eine Betonschraube 1a gemäß Fig. 2 hat einen Kopf 2a sowie ein ähnliches Gewinde wie die Ausführungsform nach Fig. 1. Der Gewindegang 6a mit dem größeren Durchmesser beginnt in einer gewendelten Spitze 3a mit einem relativ kleinen Durchmesser, wobei jedoch der volle Durchmesser von der Wendelspitze ausgehend bereits nach drei Steigungen erreicht ist. Er ist mit Kerben 7a versehen. Hinsichtlich der Ausbildung des Gewindeganges 5a mit dem geringeren Durchmesser sowie der Beschichtung 8a über die Einschraubtiefe Ea besteht gegenüber der vorerwähnten Ausführungsform kein Unterschied. Die Beschichtung im Bereich Ea steigert ebenfalls die Auszugsfestigkeit und bewirkt eine Rückdrehsicherung sowie Flüssigkeitsabdichtung.

Schrauben gemäß Fig. 1 bis 3 können beispielsweise für eine Vorbohrung von 6 mm Durchmesser bei Beton und von 5 mm Durchmesser bei Gasbeton ausgelegt werden.

## Patentansprüche

1. Verwendung einer Schraube (1) zum Formen eines Gewindes in einem in Gestein oder Beton gebohrten Loch, bei der ein Schraubengewinde (5,6) eine Beschichtung (8) mit aushärtbarem Klebstoff aufweist.

2. Verwendung nach Anspruch 1, bei der die Beschichtung (8)einen mikroverkapselten Klebstoff aufweist.

3. Verwendung nach Anspruch 2, bei der die Beschichtung (8) einen Klebstoff enthält, der mittels eines Polymerfilms mikroverkapselt und in ein reaktives Bindesystem eingebettet ist.

4. Verwendung nach Anspruch 2, bei der die Beschichtung (8) eine Flüssigkunststoff und einen Härter enthält, die mittels eines Polymerfilms getrennt mikroverkapselt und in einen Trägerlack eingebettet sind.

5. Verwendung nach einem der Ansprüche 1 bis 4, bei der die Beschichtung (8) über den gesamten Umfang des Schraubengewindes (5,6) erstreckt ist.

6. Verwendung nach einem der Ansprüche 1 bis 5, bei der die Beschichtung (8) über mehrere Gewindegänge des Schraubengewindes (5,6) erstreckt ist.

7. Verwendung nach einem der Ansprüche 1 bis 6, bei der die Beschichtung (8) gegen Wasser, Fette und/oder Öle beständig ist.

8. Verwendung nach einem der Ansprüche 1 bis 7, bei der das Schraubenmaterial Edelstahl oder Aluminium ist.

9. Verwendung nach einem der Ansprüche 1 bis 8, bei der die Schraube eine Selbstbohrschraube (1a) ist.

10. Verwendung nach einem der Ansprüche 1 bis 9, bei der die Schraube (1a) eine gewendelte Spitze (3a) aufweist.

11. Verwendung nach einem der Ansprüche 1 bis 9, bei der die Schraube (1) eine Nagelspitze (3) aufweist.

12. Verwendung nach einem der Ansprüche 1 bis 11, bei der die Schraube (1) am Kopf (2) lösbar mit einem radial schlagenden Einschraubwerkzeug verbunden wird.

## Claims

1. Use of a screw (1) for forming a thread within a hole drilled in rock or concrete comprising providing a screw thread (5, 6) with a coating (8) being composed of an adhesive adapted to be cured.

2. Use according to claim 1 comprising providing said coating (8) with a microencapsuled adhesive.

3. Use according to claim 2 comprising providing said coating (8) with an adhesive which is microencapsuled by means of a polymeric film and is embedded in a reactive bonding system.

4. Use according to claim 2 comprising providing said coating (8) with a liquid synthetic material and a hardening agent which are microencapsuled separately by means of a polymeric film and are embedded in a carrier varnish.

5. Use according to any of the claims 1 to 4 comprising providing extension of said coating (8) over all the circumference of said screw thread (5, 6).

6. Use according to any of the claims 1 to 5 comprising providing extension of said coating (8) over a plurality of threads of said screw thread (5, 6).

7. Use according to any of the claims 1 to 6 comprising providing resistance of said coating (8) to water, fats and/or oils.

8. Use according to any of the claims 1 to 7 comprising manufacturing the screw material of stainless steel or aluminium.

9. Use according to any of the claims 1 to 8 comprising defining said screw as a self-drilling screw (1a).

10. Use according to any of the claims 1 to 9 comprising providing said screw (1a) with a helical tip (3a).

11. Use according to any of the claims 1 to 9 comprising providing said screw (1) with a nail tip (3).

12. Use according to any of the claims 1 to 11 comprising detachably connecting said screw (1) to a radially acting screw-in tool on the head (2).

## Revendications

1. Utilisation d'une vis (1) pour former un taraudage dans un trou percé dans de la pierre ou du béton, vis pour laquelle un filet de vis (5, 6) présence un revêtement (8) avec un adhésif pouvant durcir.

2. Utilisation selon la revendication 1, pour laquelle le revêtement (8) présente un adhésif micro-encapsulé.

3. Utilisation selon la revendication 2, pour laquelle le revêtement (8) contient un adhésif micro-encapsulé au moyen d'un film en polymère et noyé dans un système à liant réactif.

4. Utilisation selon la revendication 2, pour laquelle le revêtement (8) contient une matière plastique liquide et un durcissant micro-encapsulés séparément au moyen d'un film polymère et noyés dans un vernis support.

5. Utilisation selon l'une des revendications 1 à 4, pour laquelle le revêtement (8) s'étend sur toute la périphérie du filet de vis (5, 6) .

6. Utilisation selon l'une des revendications 1 à 5, pour laquelle le revêtement (8) s'étend sur plusieurs filets du filetage (5, 6) de la vis.

7. Utilisation selon l'une des revendications 1 à 6, pour laquelle le revêtement (8) est résistant à l'eau, aux graisses et/ou aux huiles.

8. Utilisation selon l'une des revendications 1 à 7, pour laquelle le matériau de la vis est de l'acier spécial ou de l'aluminium.

9. Utilisation selon l'une des revendications 1 à 8, pour laquelle la vis est une vis auto-foreuse (1a).

10. Utilisation selon l'une des revendications 1 à 9, pour laquelle la vis (1a) présence une pointe (3a) à enroulements.

11. Utilisation selon l'une des revendications 1 à 9, pour laquelle la vis (1) présente une pointe en clou.

12. Utilisation selon l'une des revendications 1 à 11, pour laquelle la vis (1) est reliée sur la tête (2) de façon désolidarisable, le démontage se faisant avec un outil à vissage à frappe radiale.
